(19) Europäisches Patentamt
European Patent Office
Office européen des brevets

(11) **EP 2 066 058 A2**

(12) **EUROPEAN PATENT APPLICATION**

(43) Date of publication:
**03.06.2009 Bulletin 2009/23**

(51) Int Cl.:
*H04L 1/00* *(2006.01)*

(21) Application number: **08020191.6**

(22) Date of filing: **19.11.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **30.11.2007 US 991477 P**
**22.10.2008 US 256080**

(71) Applicant: **Broadcom Corporation**
**Irvine CA 92617 (US)**

(72) Inventors:
• **Kent, Mark**
**92081 Vista (US)**
• **Shen, Bazhong**
**92606 Irvine**
**CA (US)**

(74) Representative: **Jehle, Volker Armin**
**Bosch Jehle Patentanwaltsgesellschaft mbH**
**Flüggenstrasse 13**
**80639 München (DE)**

(54) **Method and system for constructing channel quality indicator tables for feedback in a communication system**

(57) Aspects of a method and system for constructing channel quality indicator tables for feedback in a communication system are provided. A user terminal may receive a signal transmitted by using a modulation and coding scheme (MCS) from a base station. The user terminal may assess channel quality information by accessing a CQI table to identify a CQI value based on the received radio signal. The CQI table may comprise various modulation regions in terms of spectral efficiency. The identified CQI value may be transmitted to the base station. Various standard system protocols such 3GPP, 3GPP LTE, or WiMAX, may be used for transmissions. The CQI table may be generated via PER versus spectral efficiency and/or SNR, respectively. The base station may select a MCS based on the CQI feedback from the user terminal for transmitting a subsequent radio signal to the user terminal.

**FIG. 1**

EP 2 066 058 A2

**Description**

CROSS-REFERENCE TO RELATED APLICATIONS/INCORPORATION BY REFERENCE

This patent application makes reference to, claims priority to and claims benefit from United States Provisional Patent Application Serial No. 60/991,477 filed on November 30, 2007.

The above stated application is hereby incorporated herein by reference in its entirety.

FIELD OF THE INVENTION

Certain embodiments of the invention relate to signal processing for communication systems. More specifically, certain embodiments of the invention relate to a method and system for constructing channel quality indicator tables for feedback in a communication system.

BACKGROUND OF THE INVENTION

Advanced wireless communication systems such as third generation (3G) systems and beyond employ various techniques such as adaptive modulation and coding (AMC) for improving data throughput and signal transmission quality. The AMC technique is utilized for high-speed packet transmission and adaptively changes modulation scheme and coding rate in response to changes in the transmission medium. The AMC technique utilizes estimates of instantaneous channel conditions such as path loss and shadowing, interference variations, and fast multipath fading. Instantaneous channel quality conditions are conventionally measured by various user equipment (UEs) such as cellular phones, and are broadly referred to as Channel Quality Indicators (CQIs). The measured CQI information is transmitted from a wireless receiver such as a cellular phone to a corresponding transmitter such as a base station via physical layer signaling. The base station selects a MCS based on received CQI information and transmits downlink packets using the selected MCS.

Further limitations and disadvantages of conventional and traditional approaches will become apparent to one of skill in the art, through comparison of such systems with some aspects of the present invention as set forth in the remainder of the present application with reference to the drawings.

BRIEF SUMMARY OF THE INVENTION

A method and/or system for constructing channel quality indicator tables for feedback in a communication system, substantially as shown in and/or described in connection with at least one of the figures, as set forth more completely in the claims.

A method for wireless communication is provided, the method comprising:

receiving from a base station, a radio signal by a user terminal, wherein said radio signal is transmitted using a first modulation and coding scheme (MCS); and
transmitting channel quality information from said user terminal to said base station, wherein said channel quality information is determined by said user terminal based on said received radio signal and a channel quality indicator (CQI) table comprising a plurality of modulation regions that are arranged in terms of spectral efficiency.

Advantageously, said radio signal comprises one of a 3GPP signal, a 3GPP Long Term Evolution (LTE) signal, and a WiMAX signal.

Advantageously, said channel quality information is a channel quality indicator (CQI) value.

Advantageously, said plurality of modulation regions comprises a plurality of modulation and coding schemes (MCSs).

Advantageously, said modulation regions comprises a higher modulation order region that outperforms a lower modulation order region in terms of spectral efficiency and/or signal-to-noise ratio (SNR).

Advantageously, said base station generates and/or updates said channel quality indicator (CQI) table.

Advantageously, said base station communicates said updated channel quality indicator (CQI) table to said user terminal.

Advantageously, said base station determines said plurality of modulation regions based on evaluation of packet-error-rate (PER) as a function of signal-to-noise ratio (SNR).

Advantageously, said base station determines said plurality of modulation regions based on evaluation of packet-error-rate (PER) as a function of spectral efficiency.

Advantageously, said base station determines said plurality of modulation regions based on evaluation of determined channel quality information.

Advantageously, said base station determines said plurality of modulation regions based on capacity of said user terminal.

Advantageously, the method further comprises receiving from said base station, a subsequent radio signal by said user terminal, wherein said subsequent radio signal is transmitted using a second modulation and coding scheme (MCS) determined by said base station based on said determined channel quality information.

According to an aspect, a system for wireless communication comprises:

one or more circuits operable to receive from a base station, a radio signal by a user terminal, wherein said radio signal is transmitted using a first modulation and coding scheme (MCS); and

said one or more circuits are operable to transmit channel quality information from said user terminal to said base station, wherein said channel quality information is determined by said user terminal based on said received radio signal and a channel quality indicator (CQI) table comprising a plurality of modulation regions that are arranged in terms of spectral efficiency.

Advantageously, said radio signal comprises one of a 3GPP signal, a 3GPP Long Term Evolution (LTE) signal, and a WiMAX signal.

Advantageously, said channel quality information is a channel quality indicator (CQI) value.

Advantageously, said plurality of modulation regions comprises a plurality of modulation and coding schemes (MCSs).

Advantageously, said modulation regions comprises a higher modulation order region that outperforms a lower modulation order region in terms of spectral efficiency and/or signal-to-noise ratio (SNR).

Advantageously, said base station generates and/or updates said channel quality indicator (CQI) table.

Advantageously, said base station communicates said updated channel quality indicator (CQI) table to said user terminal.

Advantageously, said base station determines said plurality of modulation regions based on evaluation of packet-error-rate (PER) as a function of signal-to-noise ratio (SNR).

Advantageously, said base station determines said plurality of modulation regions based on evaluation of packet-error-rate (PER) as a function of spectral efficiency.

Advantageously, said base station determines said plurality of modulation regions based on evaluation of determined channel quality information.

Advantageously, said base station determines said plurality of modulation regions based on capacity of said user terminal.

Advantageously, said one or more circuits are operable to receive from said base station, a subsequent radio signal by said user terminal, wherein said subsequent radio signal is transmitted using a second modulation and coding scheme (MCS) determined by said base station based on said determined channel quality information.

These and other advantages, aspects and novel features of the present invention, as well as details of an illustrated embodiment thereof, will be more fully understood from the following description and drawings.

BRIEF DESCRIPTION OF SEVERAL VIEWS OF THE DRAWINGS

FIG.1 is a block diagram illustrating an exemplary communication system that employs constructed channel quality indicator tables, in accordance with an embodiment of the invention.

FIG. 2 is a diagram illustrating a constructed CQI table format, in accordance with an embodiment of the invention.

FIG. 3 is a diagram illustrating modulation regions of a constructed CQI table, in accordance with an embodiment of the invention.

FIG. 4 is a graph illustrating determination of modulation region crossover points of a constructed CQI table, in accordance with an embodiment of the invention.

FIG. 5 is a flow chart illustrating exemplary steps for generating CQI table entries, in accordance with an embodiment of the invention.

DETAILED DESCRIPTION OF THE INVENTION

Certain embodiments of the invention may be found in a method and system for constructing channel quality indicator tables for feedback in a communication system. Various aspects of the invention may enable a user terminal to receive a radio signal transmitted with a modulation and coding scheme (MCS) from a base station. The user terminal may assess channel quality information by calculating signal-to-noise ratio (SNR) of the received radio signal and accessing a channel quality indicator (CQI) table to identify a CQI value based on the calculated SNR. The CQI table may comprise various modulation regions that are based on spectral efficiency. The identified CQI value may indicate a unique MCS within a modulation region for a given spectral efficiency. The identified CQI value may be transmitted to the base station via a CQI message or a CQI report, for instance. Various standard system protocols such as, 3GPP, 3GPP LTE, or WiMAX may be used in the communication system for supporting a CQI feature. Each modulation region within the CQI table may comprise a plurality of modulation and coding schemes (MSCs) in terms of spectral efficiency. A higher modulation order region may outperform a lower modulation order region in terms of spectral efficiency and/or SNR. The CQI table may be generated and/or updated by the base station and communicated to the user terminal. The CQI table may be generated by examining PER versus spectral efficiency and/or SNR, respectively. The CQI table may be determined based on the CQI feedback from the user terminal and/or the capacity of the user terminal. Moreover, based on the CQI feedback from the UE, the base station may adjust allocation of radio resources, select a MCS, and transmit a subsequent radio signal to the UE with the selected MCS, accordingly.

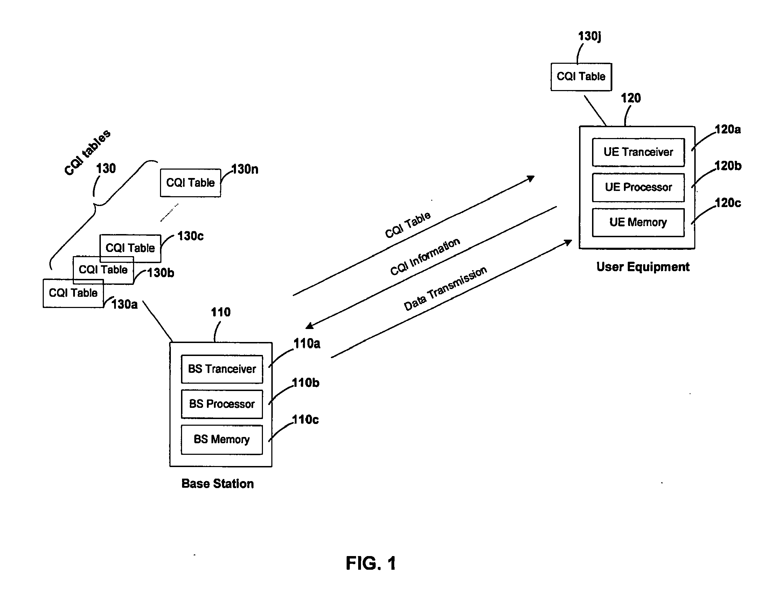

FIG. 1 is a block diagram illustrating an exemplary communication system that employs constructed channel quality indicator tables, in accordance with an embodiment of the invention. Referring to FIG. 1, there is shown a base station 110, a user equipment (UE) 120, a plurality of CQI tables 130a-130n generated by the base station 110, and a CQI table 130j used by the UE 120 for CQI reporting. The base station 110 may comprise a BS transceiver 110a, a BS processor 110b, and a BS memory 110c. The UE 120 may comprise a UE transceiver 120a, a UE processor 120b, and a UE memory 120c.

The base station 110 may comprise suitable logic, circuitry and/or code that may enable establishment of connections or communication sessions over standard air interface such as 3GPP Long Term Evolution (LTE), assigning air-interface resources, and performing scheduling and maintenance. The base station 110 may enable receiving and/or transmitting radio frequency signals from and/or to a plurality of user equipment such as the UE 120 via the BS transceivers 110a. The base station 110 may generate and maintain the plurality of channel quality indicator (CQI) tables 130a-130n to be utilized for improving data throughput and signal transmission quality. The base station 110 may be enabled to select one or more CQI tables such as the CQI table 130j and may deploy the CQI table 130j to the UE 120 during call setup or during data transfer, for instance. The CQI table 130j may be utilized by the UE 120 to provide channel quality feedback to the base station 110. The base station 110 may generate and update the plurality of CQI tables 130a-130n periodically at fixed intervals such as, for example, based on the time of day, or aperiodically in response to various triggering events or determined conditions, for example. In this regard, the plurality of CQI tables 130a-130n may be generated and updated based on newly received data such as CQI feedbacks received from one or more UEs served by the base station 110.

The base station 110 may be configured to generate the plurality CQI tables 130a-130n by using various ways. In this regard, the plurality of CQI tables 130a-130n may be generated based on performances in terms of spectral efficiency ($S_{eff}$) and/or signal-to-noise ratios (SNR). The spectral efficiency ($S_{eff}$) may be defined as follows:

$$S_{eff} = code\ rate \times \mathrm{mod}\ ulation - order,$$

The spectral efficiency ($S_{eff}$) may indicate the number of bits per modulation symbol. The base station 110 may assign radio resources efficiently among multiple UEs such as the UE 120 based on, for example, the user data backlog and on a CQI feedback received from the UE 120. Various CQI feedbacks from one or more UEs such as the UE 120 may reflect the instantaneous downlink radio-channel conditions at the UE 120 and may indicate a recommended MCS (Modulation and Coding Scheme) for next downlink packet transmission to the UE 120. The base station 110 may not be obliged to act on the recommended MCS in the CQI feedback that is received from the UE 120. However, based on the received CQI feedback from the UE 120, the base station 110 may adjust allocation of radio resources, select a MCS, and transmit downlink packets to the UE 120 using the selected MCS.

The transceiver 110a may comprise suitable logic, circuitry and/or code that may be enabled to generate RF signals and/or intermediate frequency (IF) signals from baseband signals in accordance with a radio frequency technology and/or standard such as LTE. The transceiver 110a may communicate the baseband signals with the BS processor 11 0b

The BS processor 110b may comprise suitable logic, circuitry and/or code that may be enabled to perform a variety of signal processing tasks and may comprise controlling of the BS transceivers 110a, for example. The BS processor 110b may apply various advanced algorithms stored in the BS memory 110c in various tasks such as scheduling and/or mobility management. Various algorithms may be used by the BS processor 110b to choose a particular CQI table for the UE 120. The selection of the CQI table 130j may be determined based on various factors such as the capability of the UE 120.

The UE 120 may comprise suitable logic circuitry and/or code that may be enabled to receive and/or transmit radio frequency signals from and/or to the base station 110 via the UE transceivers 120a. The UE transceiver 120a may comprise suitable logic, circuitry and/or code that may be enabled to generate RF signals and intermediate frequency (IF) signals from baseband signals, which may be communicated from the UE processor 120b, in accordance with a radio frequency technology and/or standard such as LTE. The UE processor 120b may comprise suitable logic, circuitry and/or code that may be enabled to perform a variety of signal processing tasks and may comprise controlling of the UE transceivers 120a, for example. The UE processor 120b may apply various advanced algorithms stored in the UE memory 120c in performing various tasks such as baseband signals processing.

The UE memory 120c may comprise suitable logic, circuitry and/or code that may be enabled to store data and/or code that may be accessed by the UE processor 120b and/or the UE transceiver 120a. The UE120 may be enabled to provide channel quality information to the base station 110 based on measurements of, for example, the signal-to-noise ratios (SNR) on received downlink signals. The SNR may be calculated by the UE processor 120b. The channel quality information may be presented in the form of, for example, a CQI message which is transmitted from the UE 120 to the base station 110. The UE 120 may form the CQI message based on the calculated SNR by accessing the CQI table 130j and identifying at least one CQI value from the CQI table 130j. The CQI table 130j may be communicated from the base station 110 or otherwise communicated from the base station 110 to the UE 120, and stored in the UE memory 120c. In this regard, the CQI table 130j may be efficiently constructed, at the base station 110, based on spectral efficiency and/or SNR. Entries in a CQI table such as the CQI table 130j may be represented, for example, in the form of {modulation, coding rate} for each CQI value. The UE 120 may transmit the identified CQI value to the base station 110 via the transceivers 120a. The identified CQI value may reflect the instantaneous downlink radio-channel conditions and may indicate a recommended modulation-coding rate pair to the base station 110. The use of the CQI table 130j may permit the base stations 110 to more reliably and accurately allocate radio resources for downlink transmission to the UE 120.

In operation, the UE 120 may receive signals from the base station 110 via the BS transceiver 110a and the UE transceiver 120a, respectively. The UE processor 120b may be enabled to process various signals in the UE processor 120b. For example, the UE processor 120b may be enabled to calculate the SNR on received downlink signals and may identify a CQI value for the calculated SNR by accessing the CQI table 130j stored in the memory 120c. A plurality of CQI tables 130a-130n may be generated and maintained by the base station 110. The plurality of CQI tables 130a-130n and may be constructed or generated based on spectrum efficiency and/or operating SNR. One or more CQI tables such as the CQI table 130j may be selected from the generated plurality of CQI table 130a-130n for a particular UE such as the UE 120. The selected CQI table 130j may be communicated from the base station 110 to the UE 120 or otherwise communicated to the UE 120. The entries of the CQI table 130j may be presented in terms of a modulation-coding rate pair for each CQI value. The UE 120 may be configured to identify a CQI value from the CQI table 130j for each received downlink transmission from the base station 110. The UE 120 may be enabled to form a CQI message or a CQI report comprising the identified CQI value and transmit to the base station 110. Based on the received identified CQI value, the base station 110 may adjust allocation of radio resources, select a MCS, and transmit data to the UE 120 with the selected MCS, accordingly.

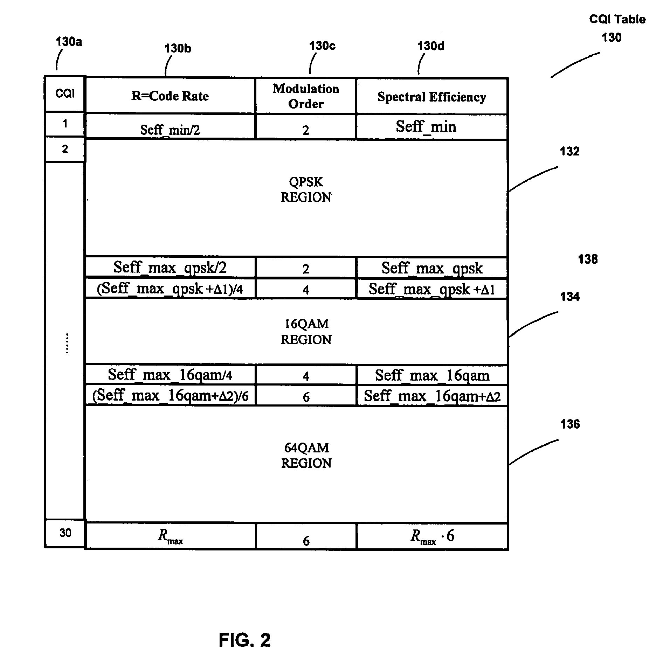

FIG. 2 is a diagram illustrating an exemplary constructed CQI table format, in accordance with an embodiment of the invention. Referring to FIG. 2, there is shown a CQI table 130 comprising a CQI field 130a, a code rate filed 130b, a modulation order field 130c, and a spectral efficiency field 130d, respectively. The various fields in the CQI table 130 may further be divided into three modulation regions, a QPSK region, a 16QAM region, and a 64QAM region, respectively. Various parameters describing the CQI table 130 may be summarized in Table 1.

Table 1 CQI region parameters

| Seff_min | minimum spectral efficiency for which CQI may be reported. |
|---|---|
| Seff_max_qpsk | maximum spectral efficiency for which QPSK may operate. |
| Seff_max_16qam | maximum spectral efficiency for which 16QAM may operate. |
| Rmax | maximum code rate for operation of 64QAM. |
| $\Delta 1$ | transition parameter ensuring operating region for 16QAM will outperform the QPSK region. |
| $\Delta 2$ | transition parameter ensuring operating region for 64QAM will outperform the 16QAM region |

Referring to the table 1, the parameter Seff_min may indicate a minimum acceptable spectral efficiency for which CQI information at the UE 120 may be reported. The parameters Seff_max_qpsk and Seff_max_16qam may represent the maximum spectral efficiency for which QPSK or the 16QAM may operate, respectively. The parameters $\Delta 1$ and $\Delta 2$ may be transition parameters to ensure a high order modulation region may outperform a lower modulation region. For example, the parameter $\Delta 1$ may ensure that the 16QAM region 134 may outperform the QPSK region 132. The parameter $\Delta 2$ may be used to ensure that the 64QAM region 136 may outperform the 16QAM region 134.

The CQI field 130a may be used to provide a quantitative measure of channel quality information at the UE 120. The CQI field 130a may comprise various integer values ranging from, for example, 0 to 30. A value of 0 may indicate out-of-range, for instance. The CQI values may be derived from the calculated SNR values, for example, at the UE 120. Each CQI value in the CQI field 130a may indicate a unique code rate-modulation type pair at a given spectral efficiency.

The code rate field 130b may comprise various coding rates such as 0.55 and 0.62 which may be used at the base station 110 for downlink transmissions to the UE 120.

The modulation order field 130c may represent number of bits per modulation symbol. For example, the modulation order of 2, 4, and 6 in the modulation order field 130c may indicate the modulation type of QPSK, 16QAM, and 64QAM, respectively.

The spectral efficiency field 130d may provide information on achievable spectral efficiency at the UE 120. The entries of the spectral efficiency field 130d may be produced by multiplying code rates with modulation orders.

The three modulation regions, the QPSK region 132, the 16QAM region 134, and the 64QAM region 136, of the CQI table 130 may be defined in terms of the spectral efficiency and modulation type. CQI table entries in each modulation region may be represented as follows:

{*Code Rate, Modulation Order*}

The CQI table entries may be may be related to spectral efficiency (Seff) and SNR as follows:

$$Seff = Code\ Rate \times Modulation\ Order$$

$$Seff = \log_2 (1 + SNR)$$

The separation from region to region may be where a higher order modulation region may outperform a lower order modulation region in, for example, PER (packet error rates).

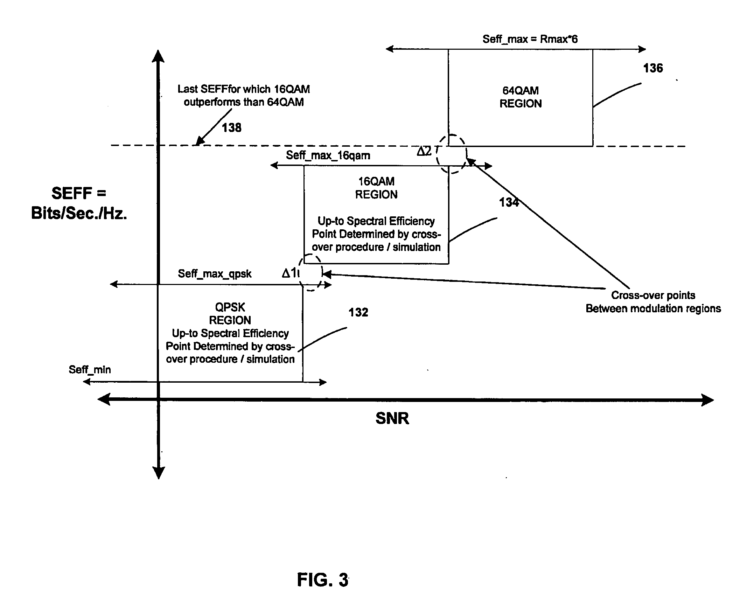

FIG. 3 is a diagram illustrating modulation regions of a constructed CQI table, in accordance with an embodiment of the invention. Referring to FIG.3, the QPSK region 132, the 16QAM region 134, and the 64QAM region 136 are presented in terms of spectral efficiency and SNR. Each modulation region may represent a region where a particular operation modulation may have the lowest modulation order while ensuring the best performance in term of spectral efficiency and/or PER in contrast with other higher modulation orders. The formation of each modulation region such as the 16QAM region 134 may start with the determination of the modulation region crossover points, for example, the crossover points from 16QAM to 64QAM, and then determine a modulation region separation line such as the line 138 which may indicate the last spectral efficiency for which 16QAM may still outperform than 64QAM. The separation from one modulation region to another modulation region in the CQI table 130j may be determined in terms of spectral efficiency and operating SNR. The region transitioning parameters Δ1 and Δ2 may be selected statically or dynamically, depending on implementation and/or QoS requirements.

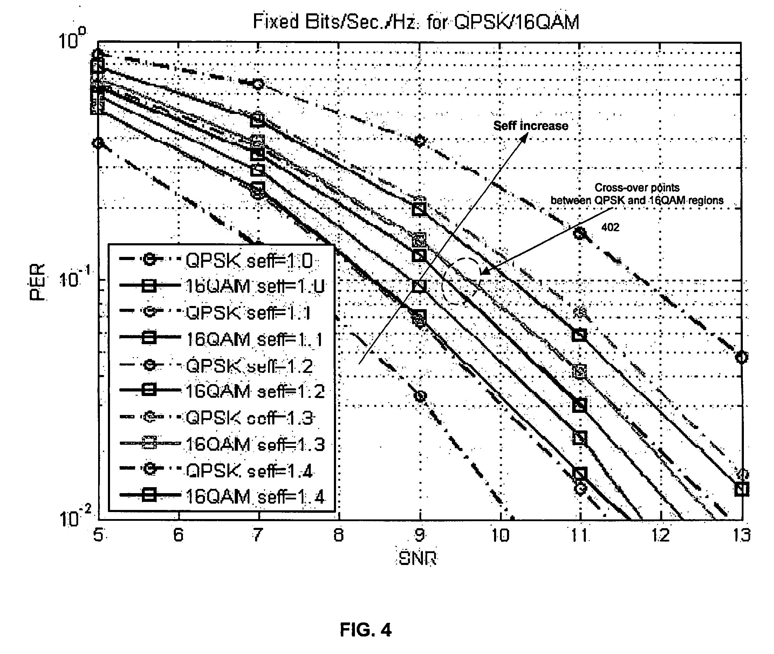

FIG. 4 is a graph illustrating exemplary determination of modulation region crossover points of a constructed CQI table, in accordance with an embodiment of the invention. Referring to FIG.4, PER curves across a range of spectral efficiency are presented as function of SNR. Modulation region crossover points may be the boundary points where a higher order modulation (16QAM) outperforms than a lower order modulation (QPSK) in spectral efficiency and/or PER.

The modulation region crossover points, for example, from QPSK to 16QAM, may be determined by evaluating corresponding PER and spectral efficiency performances in terms of SNR. Referring to FIG.4, the crossover points 402 may be determined by first fixing spectral efficiency for QPSK and 16QAM with fixed bandwidth allocation, second examining PER as a function of SNR, then followed by sweeping spectral efficiency, from 1.0 to 1.4, for instance, to identify the crossover points 402. In this case, the identified crossover points 402 may be distributed in spectral efficiency of [1.1, 1.3].

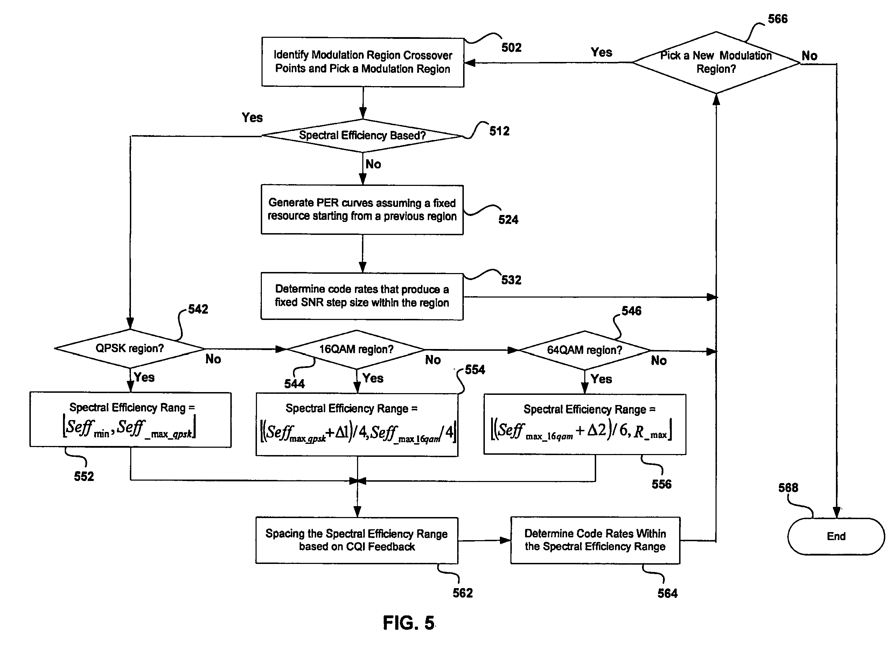

FIG. 5 is a flow chart illustrating exemplary steps for generating CQI table entries, in accordance with an embodiment of the invention. Referring to FIG. 5, the exemplary steps begin with step 502. Exemplary parameters for generating CQI table entries are summarized in Table 1. In step 502, the base station 110 may be enabled to identify modulation region crossover points. A modulation region such as the QPSK region 132 may be selected to start with for generating CQI table entries. In step 512, the base station 110 may determine an approach for generating CQI table entries. In instances where a spectral efficiency based approach may be selected for generating CQI table entries. In step 542, it may be determined whether the currently selected modulation region is a QPSK region. In instances where the current picked modulation region is a QPSK region, then in step 552, a spectral efficiency range for the QPSK region may be determined as follows:

$$\lfloor Seff_{min}, Seff_{\_max\_qpsk} \rfloor$$

In step 562, the determined spectral efficiency range may be uniformly or arbitrarily spaced based on CQI feedback information from user terminals such as the UE 120. In step 564, each CQI table entry within the determined spectral range for the QPSK region may be calculated as follows:

$$Coding\,Rate = \frac{Spectral\,Efficiency}{Modulation\,Order} = \frac{Spectral\,Efficiency}{2}$$

For instance, assume that the spectral efficiency range of equals to for the QPSK region 132. The spectral efficiency range may be uniformly spaced with a step size of 0.15 in spectral efficiency. The spectral efficiency based approach may generate exemplary CQI table entries within the QPSK region as shown in Table 2.

Table 2 CQI Table Entries within a QPSK Region

| CQI Value | R=Code Rate | Modulation Order | Spectral Efficiency |
|---|---|---|---|
| 1 | 2.5000E-02 | 2 | 5.0000E-02 |
| 2 | 1.0000E-01 | 2 | 2.0000E-01 |
| 3 | 1.7500E-01 | 2 | 3.5000E-01 |
| 4 | 2.5000E-01 | 2 | 5.0000E-01 |
| 5 | 3.2500E-01 | 2 | 6.5000E-01 |
| 6 | 4.0000E-01 | 2 | 8.0000E-01 |
| 7 | 4.7500E-01 | 2 | 9.5000E-01 |
| 8 | 5.5000E-01 | 2 | 1.1000E+00 |

In step 566, it may be determined whether a new modulation region should be selected for generating the CQI table entries. In instances where a new modulation region may be selected for generating the CQI table entries, the next step is step 512. In step 542, in instances where the currently selected modulation region is not a QPSK region, then in step 544, it may be determined the currently selected modulation region may be a 16QAM region. In instances where the current picked modulation region is a 16QAM region, then in step 554, a spectral efficiency range for the 16QAM region may be determined as follows:

$$\left[\left(Seff_{max\_qpsk} + \Delta 1\right)/4, Seff_{\_max\_16qam}/4\right]$$

The next step is step 562. In step 544, in instances where the current picked modulation region is not a 16QAM region, then in step 546, it may be determined whether the current picked modulation region is a 64QAM region. In instances where the current picked modulation region is a 64QAM region, then in step 556, a spectral efficiency range for the 64QAM region may be determined as follows:

$$\left[\left(Seff_{max\_16qam} + \Delta 2\right)/6, R_{max}\right]$$

The next step is step 562.
In step 546, in instances where the current picked modulation region is a 64QAM region 136 for generating CQI table entries. In step 566, it may be determined whether a new modulation region may be required for generating the CQI table entries. In instances where a new modulation region may be required for generating the CQI table entries, then execution passes to step 502. In step 566, in instances where a new modulation region may not be required for generating the CQI table entries, then execution passes to step 568, where the CQI table entry generation process may be finished. The generated CQI table may be communicated or downloaded to user terminals such as the UE 120. The downloaded CQI table such as the CQI table 130 may be stored in the memory 120c and may be accessed by the processor 120b to provide CQI feedback to the base station 110. In step 512, in instances where a spectral efficiency based approach may not be selected, then in step 524, a plurality of PER curves versus SNR may be generated with a fixed resource starting from a previous modulation region. In step 532, code rates which may produce a fixed SNR step size within the picked modulation region may be determined. The next step may be step 566.

The spectral efficiency may be described as bit throughput per Hz, which may lead to represent CQI table entries in terms of user terminal throughput rates. The spectral efficiency based approach presented in FIG.5 may be explained in terms of throughput rate, accordingly. Moreover, the spectral efficiency based approach may be combined with the PER based approach for generating the CQI table entries.

Aspects of a method and system for constructing channel quality indicator tables for feedback in a communication system are provided. In accordance with various embodiments of the invention, a user terminal such as the UE 120 may receive a radio signal from the base station 110. The received radio signal may be transmitted by using a modulation and coding scheme (MCS) selected by the base station 110. The UE 120 may assess channel quality information by calculating signal-to-noise ratio (SNR) of the received radio signal via the processor 120b and accessing the CQI table 130 to identify corresponding CQI value based on the calculated SNR. The CQI table 130 may comprise various modulation regions in terms of spectral efficiency as presented in FIG. 2. The identified CQI value may indicate a unique MCS within a modulation region for a particular spectral efficiency. The UE 120 may form a CQI message or a CQI report comprising the identified CQI value and transmit to the base station 110 via the transceivers 120a. The base station 110 may communicate with the UE 120 by using various standard system protocols such as, for example, 3GPP, 3GPP LTE, or WiMAX, which may support a CQI reporting procedure. Each modulation region such as the QPSK region 132 may comprise a plurality of modulation and coding schemes (MCSs) in terms of spectral efficiency. As described in FIG. 3, a higher modulation order region such as 16QAM region 134 may outperform a lower modulation order region such as the QPSK region 132 in terms of spectral efficiency and/or SNR. The CQI table 130 may be generated and/or updated by the base station 110 and may be communicated to the UE 120 via signaling, for instance. The base station 110 may generate the CQI table 130 by examining PER versus spectral efficiency and/or SNR as presented in FIG 3, FIG.4, and FIG.5, respectively. The base station 110 may generate and/or update the CQI table 130 based on the CQI feedback from the UE 120, as well as the capacity of the UE 120. Moreover, based on the CQI feedback from the UE 120, the base station 110 may adjust allocation of radio resources, select a MCS, and transmit a subsequent radio signal to the UE 120 with the selected MCS, accordingly.

Another embodiment of the invention may provide a machine and/or computer readable storage and/or medium, having stored thereon, a machine code and/or a computer program having at least one code section executable by a machine and/or a computer, thereby causing the machine and/or computer to perform the steps as described herein for constructing channel quality indicator tables for feedback in a communication system.

Accordingly, the present invention may be realized in hardware, software, or a combination of hardware and software. The present invention may be realized in a centralized fashion in at least one computer system, or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.


**Claims**

1. A method for wireless communication, the method comprising:

   receiving from a base station, a radio signal by a user terminal, wherein said radio signal is transmitted using a first modulation and coding scheme (MCS); and

transmitting channel quality information from said user terminal to said base station, wherein said channel quality information is determined by said user terminal based on said received radio signal and a channel quality indicator (CQI) table comprising a plurality of modulation regions that are arranged in terms of spectral efficiency.

2. The method according to claim 1, wherein said radio signal comprises one of a 3GPP signal, a 3GPP Long Term Evolution (LTE) signal, and a WiMAX signal.

3. The method according to claim 1, wherein said channel quality information is a channel quality indicator (CQI) value.

4. The method according to claim 1, wherein said plurality of modulation regions comprises a plurality of modulation and coding schemes (MCSs).

5. The method according to claim 1, wherein said modulation regions comprises a higher modulation order region that outperforms a lower modulation order region in terms of spectral efficiency and/or signal-to-noise ratio (SNR).

6. The method according to claim 1, wherein said base station generates and/or updates said channel quality indicator (CQI) table.

7. A system for wireless communication, the system comprising:

one or more circuits operable to receive from a base station, a radio signal by a user terminal, wherein said radio signal is transmitted using a first modulation and coding scheme (MCS); and
said one or more circuits are operable to transmit channel quality information from said user terminal to said base station, wherein said channel quality information is determined by said user terminal based on said received radio signal and a channel quality indicator (CQI) table comprising a plurality of modulation regions that are arranged in terms of spectral efficiency.

8. The system according to claim 7, wherein said radio signal comprises one of a 3GPP signal, a 3GPP Long Term Evolution (LTE) signal, and a WiMAX signal.

9. The system according to claim 7, wherein said channel quality information is a channel quality indicator (CQI) value.

10. The system according to claim 7, wherein said plurality of modulation regions comprises a plurality of modulation and coding schemes (MCSs).

FIG. 1

CQI Table
130

| CQI | R=Code Rate | Modulation Order | Spectral Efficiency |
|---|---|---|---|
| 1 | Seff_min/2 | 2 | Seff_min |
| 2 | QPSK REGION | | |
| | Seff_max_qpsk/2 | 2 | Seff_max_qpsk |
| | (Seff_max_qpsk +Δ1)/4 | 4 | Seff_max_qpsk +Δ1 |
| ⋮ | 16QAM REGION | | |
| | Seff_max_16qam/4 | 4 | Seff_max_16qam |
| | (Seff_max_16qam+Δ2)/6 | 6 | Seff_max_16qam+Δ2 |
| | 64QAM REGION | | |
| 30 | $R_{max}$ | 6 | $R_{max} \cdot 6$ |

130a 130b 130c 130d

132 138 134 136

FIG. 2

FIG. 3

Fixed Bits/Sec./Hz. for QPSK/16QAM

FIG. 4

EP 2 066 058 A2

**FIG. 5**

502 — Identify Modulation Region Crossover Points and Pick a Modulation Region

512 — Spectral Efficiency Based?

524 — Generate PER curves assuming a fixed resource starting from a previous region

532 — Determine code rates that produce a fixed SNR step size within the region

542 — QPSK region?

552 — Spectral Efficiency Rang = $\left[ Seff_{min}, Seff_{max\_qpsk} \right]$

544 — 16QAM region?

554 — Spectral Efficiency Range = $\left[ \left( Seff_{max\_qpsk} + \Delta 1 \right)/4, Seff_{max\_16qam}/4 \right]$

546 — 64QAM region?

556 — Spectral Efficiency Range = $\left[ \left( Seff_{max\_16qam} + \Delta 2 \right)/6, R\_max \right]$

562 — Spacing the Spectral Efficiency Range based on CQI Feedback

564 — Determine Code Rates Within the Spectral Efficiency Range

566 — Pick a New Modulation Region?

568 — End

14

**EP 2 066 058 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 60991477 B